# EUROPEAN PATENT SPECIFICATION

(11) **EP 4 119 356 B1**
(45) Date of publication and mention of the grant of the patent: **02.04.2025**
(21) Application number: 22184363.4
(22) Date of filing: 12.07.2022
(51) Int. Cl.: B44C 1/00, G04D 3/00, G04B 45/00

(54) **TIMEPIECE COMPONENT, TIMEPIECE, AND METHOD FOR MANUFACTURING TIMEPIECE COMPONENT**
UHRKOMPONENTE, UHR UND VERFAHREN ZUR HERSTELLUNG EINER UHRKOMPONENTE
COMPOSANT DE PIÈCE D'HORLOGERIE, PIÈCE D'HORLOGERIE ET PROCÉDÉ DE FABRICATION D'UN COMPOSANT DE PIÈCE D'HORLOGERIE

(30) Priority: 12.07.2021 JP 2021114836
(43) Date of publication of application: 18.01.2023
(73) Proprietor: Seiko Epson Corporation, Tokyo 160-8801 (JP)
(72) Inventor: YOSHINAGA, Ai, Suwa-shi, 392-8502 (JP)
(74) Representative: Lewis Silkin LLP

(56) References cited:
- EP-A1- 3 067 220
- EP-A1- 4 026 701
- EP-A1- 4 071 558
- CH-A1- 713 871
- CH-A1- 714 234

## Description

The present application is based on, and claims priority from JP Application Serial Number 2021-114836, filed June 12,2021.

### BACKGROUND

### 1. Technical Field

The present disclosure relates to a timepiece component, a timepiece, and a method for manufacturing a timepiece component.

### 2. Related Art

A timepiece component is used in which figures such as characters and marks are formed by irradiating a metal surface with a laser. In JP-A-2018-20378, a femtosecond laser is used as the laser. Abrasion processing is performed to instantaneously vaporize and disperse a solid at a metal surface by irradiating a timepiece component with a femtosecond laser. By the abrasion processing, a surface having a large surface roughness and a low glossiness is formed. A groove having a low glossiness at the bottom is formed at a position irradiated with the femtosecond laser. Patterns such as figures, characters, and marks are formed in the timepiece component by the groove.

Since a femtosecond laser is used in processing disclosed in JP-A-2018-20378, a surface having a low glossiness at a bottom of a groove is formed on a timepiece component. In processing of a timepiece component, it may be desired to impart gloss to a fine cutting surface formed by femtosecond laser processing. In such a case, it is necessary to provide another process different from the femtosecond laser processing. However, it is difficult to execute gloss processing on a fine cutting surface formed by a femtosecond laser, and productivity may also be reduced when another process is provided. Therefore, a manufacturing method has been desired by which an aesthetic appearance is attained by imparting gloss to any portion of a surface to be processed by a femtosecond laser.

EP 4071558 discloses a method of manufacturing a watch component comprising a surface to be treated, this surface being prepared beforehand by a sub-step of polishing and/or by a sub-step of adding an upper malleable layer (2), comprising surface structuring of said surface to be treated of the watch component, then second surface structuring of said surface to be treated structured by the previous step of first surface structuring.

EP 4026701 discloses a decorating method for decorating a metal component by laser irradiation. The method includes performing laser irradiation while scanning, with a first element as a starting point, along a direction toward the metal component, and an oxide film is formed on the front surface of the metal component by the laser irradiation. Furthermore, EP3067220 discloses a method of manufacturing a watch component comprising a surface to be treated, said surface to be treated having a first processed surface having a predetermined pattern with a first laser formed during a first step, and having a second surface roughness smaller than that of the first processed surface in a second step, said first and second surfaces being at least partially superimposed.

### SUMMARY

A method for manufacturing a timepiece component includes: forming a first processed surface having a predetermined pattern by irradiating a surface of a metal component with a first laser having a pulse width of femtoseconds; and forming a second processed surface having a surface roughness smaller than that of the first processed surface by irradiating at least a part of the first processed surface with a second laser having a pulse width of femtoseconds or more, wherein when forming the first processed surface, an oxide film is formed on the first processed surface, and when forming the second processed surface, an oxide film thicker than the oxide film of the first processed surface is formed on the second processed surface.

A timepiece component includes: a base material made of metal; a first processed surface that has a predetermined pattern, that has a surface roughness of a first surface roughness, and that is formed by irradiating the base material with the first laser having a pulse width of femtoseconds; and a second processed surface that has a surface roughness of a second surface roughness smaller than the first surface roughness, and that is formed by irradiating at least a part of the first processed surface with the second laser having a pulse width of femtoseconds or more, wherein the first processed surface and the second processed surface have an oxide film on a surface thereof, and the oxide film on the surface of the second processed surface is thicker than the oxide film on the surface of the first processed surface.

A timepiece includes the above-described timepiece component.

### BRIEF DESCRIPTION OF THE DRAWINGS

FIG. 1 is a rear view of a timepiece according to a first embodiment.
FIG. 2 is a view illustrating a measurement example of a surface shape on a first processed surface.
FIG. 3 is a view illustrating a measurement example of a surface shape on a second processed surface.
FIG. 4 is a flowchart of a laser decoration method.
FIG. 5 is a schematic view illustrating a first machining process.
FIG. 6 is a schematic view illustrating the first machining process.
FIG. 7 is a schematic view illustrating the first machining process.
FIG. 8 is a schematic view illustrating a second machining process.
FIG. 9 is a schematic view illustrating the second machining process.
FIG. 10 is a schematic side sectional view illustrating the first processed surface.
FIG. 11 is a schematic side sectional view illustrating the second processed surface.
FIG. 12 is a rear view of a timepiece according to a second embodiment.
FIG. 13 is a diagram illustrating a relationship between a film thickness and a color of an oxide film according to a third embodiment.

### DESCRIPTION OF EXEMPLARY EMBODIMENTS

### First Embodiment

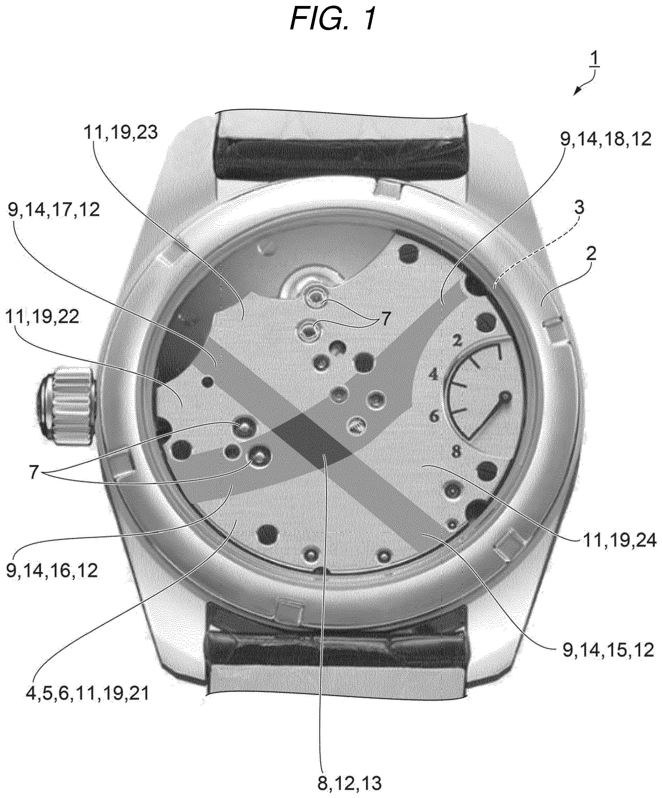

In FIG. 1, a timepiece 1 according to the present embodiment is a three-pointer analog wristwatch. FIG. 1 is a view of the timepiece 1 as viewed from the back side. The timepiece 1 is not limited to an analog timepiece. Alternatively, the timepiece 1 may be a timepiece provided with a metal component, and may be, for example, a digital timepiece, a combination timepiece, a smart watch, or a health watch.

The timepiece 1 is a wristwatch having a see-through back. Since a transparent back cover 3 is attached to a body 2, an internal mechanism can be observed. The body 2 functions as a case. A material of the body 2 is a hard metal such as titanium or stainless steel. The body 2 has a substantially circular shape. The back cover 3 is fitted to the inner periphery of a ring-shaped wall of the body 2. A material of the back cover 3 is sapphire glass.

A movement 4 for driving pointers is housed inside the body 2. In FIG. 1, a receiving plate 5 serving as a timepiece component and a metal component of the movement 4 is observed through the back cover 3. The receiving plate 5 includes a base material 6 made of metal. The base material 6 is provided with a plurality of gear bearings 7. A material of the base material 6 is titanium, a titanium alloy, or stainless steel. Alternatively, as the material of the base material 6, a metal such as nickel silver, brass, duralumin, or an alloy containing iron may be used.

The base material 6 includes a first region 8, a second region 9, and a third region 11. A surface of the base material 6 in the first region 8 is a first processed surface 12. Shapes of the first region 8 and the first processed surface 12 form a first pattern 13 serving as a pattern. In other words, the first processed surface 12 has the first pattern 13. A surface roughness of the first processed surface 12 is a first surface roughness. The first processed surface 12 and the first pattern 13 are formed by irradiating the base material 6 with a first laser having a pulse width of femtoseconds. The first laser is, for example, a femtosecond laser, and a range of the pulse width is preferably 100 fs to 900 fs.

A surface of the base material 6 in the second region 9 is a second processed surface 14. The second processed surface 14 in the second region 9 includes four portions. Shapes of the four portions are a second pattern 15 serving as a pattern, a third pattern 16 serving as a pattern, a fourth pattern 17 serving as a pattern, and a fifth pattern 18 serving as a pattern. A surface roughness of the second processed surface 14 is a second surface roughness. The second surface roughness is smaller than the first surface roughness. The second processed surface 14 is formed by irradiating the first processed surface 12 with a second laser having a pulse width of femtoseconds or more. Therefore, the second processed surface 14 is a surface covering a part of the first processed surface 12. According to the present embodiment, the first processed surface 12 has the first pattern 13 and the second pattern 15 to the fifth pattern 18. The second processed surface 14 has the second pattern 15 to the fifth pattern 18.

The surface roughness of the first processed surface 12 is the first surface roughness. The surface roughness of the second processed surface 14 is the second surface roughness. A surface roughness is based on a surface shape of a surface to be measured. The surface roughness is an arithmetic average roughness Sa. The first surface roughness and the second surface roughness are measured by a shape analysis laser microscope. The shape analysis laser microscope is a VK-X250 (registered trademark) manufactured by Keyence Corporation. A magnification of the shape analysis laser microscope at the time of measurement is 150 times.

A surface of the base material 6 in the third region 11 is a non-processed surface 19. The non-processed surface 19 in the third region 11 includes four portions. Shapes of the four portions are a sixth pattern 21, a seventh pattern 22, an eighth pattern 23, and a ninth pattern 24. The non-processed surface 19 is a surface that is neither irradiated with the femtosecond laser nor irradiated with the second laser.

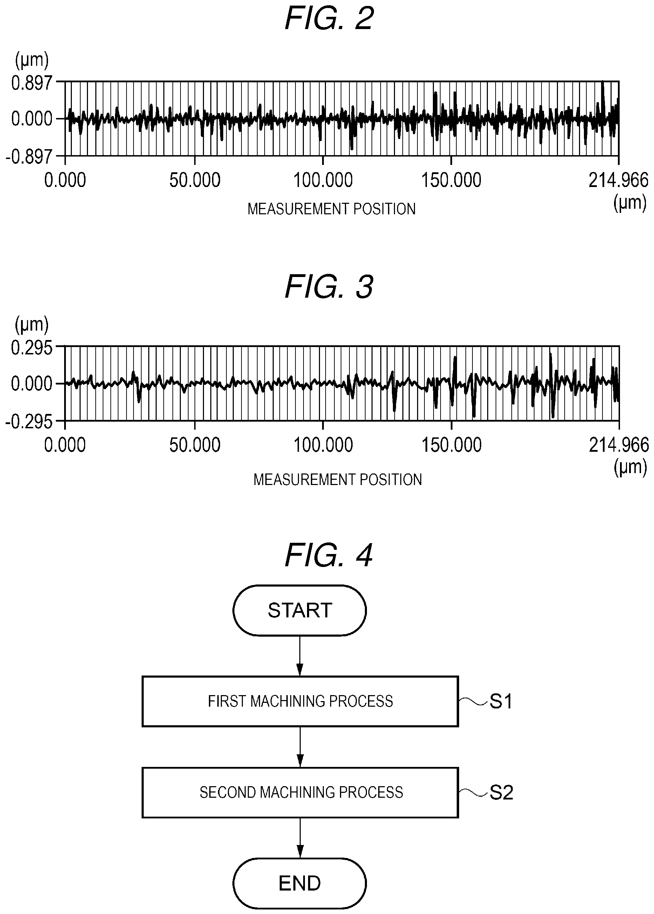

FIGS. 2 and 3 are examples of roughness curves in line roughness measurement in which a surface roughness is measured along a predetermined line. A horizontal axis represents a measurement position at which the surface roughness is measured. Specifically, the measurement position is represented by a distance from a measurement start point. A vertical axis represents a position of a surface shape in a thickness direction of the base material 6. An average position of the measurement results is 0. A + direction is a direction in which the surface shape protrudes, and a - direction is a direction in which the surface shape is recessed.

As illustrated in FIG. 2, in an example of a surface shape of the first processed surface 12, unevenness of the surface changes between -0.897 µm to +0.897 µm.

As illustrated in FIG. 3, in an example of a surface shape of the second processed surface 14, unevenness of the surface changes between -0.295 µm to +0.295 µm. The second processed surface 14 has a surface roughness smaller than that of the first processed surface 12.

The surface roughness is obtained by a surface roughness measurement, which is a measurement attained by two-dimensionally expanding the line roughness measurement. Similar to the line roughness measurement, in the surface roughness measurement, the surface roughness of the second processed surface 14 is also smaller than that of the first processed surface 12. Therefore, the second surface roughness is smaller than the first surface roughness. The second surface roughness is preferably 0.1 µm or more and 0.3 µm or less.

According to this configuration, the surface of the base material 6 includes the first processed surface 12 and the second processed surface 14. Since the first processed surface 12 has a surface roughness larger than that of the second processed surface 14, the first processed surface 12 is a so-called matte surface having a low glossiness. The glossiness is measured by a gloss meter. Since the second processed surface 14 has a surface roughness smaller than that of the first processed surface 12, the second processed surface 14 is a surface having a high glossiness. Since the surface of the base material 6 includes the first processed surface 12 having a low glossiness and the second processed surface 14 having a high glossiness, the surface of the base material 6 can have an aesthetic appearance as compared with a case in which the surface of the base material 6 only includes the first processed surface 12 having a low glossiness.

Next, a method for manufacturing the first processed surface 12 and the second processed surface 14 of the receiving plate 5 described above will be described. In the flowchart in FIG. 4, step S1 is a first machining process. In this process, the surface of the base material 6 of the receiving plate 5 is irradiated with a femtosecond laser, thereby forming the first processed surface 12 having the first pattern 13 and the second pattern 15 to the fifth pattern 18. Next, the process proceeds to step S2.

Step S2 is a second machining process. In this process, a part of the first processed surface 12 is irradiated with the second laser having a pulse width of femtoseconds or more, thereby forming the second processed surface 14 having a surface roughness smaller than that of the first processed surface 12 and having an oxide film thicker than that of the first processed surface 12. Through processes described above, the first processed surface 12 and the second processed surface 14 are completed. Here, the pulse width of femtoseconds or more is, for example, preferably 100 fs or more, and more preferably 1 ns or more and 200 ns or less.

Next, a manufacturing method will be described in detail corresponding to the steps illustrated in FIG. 4.

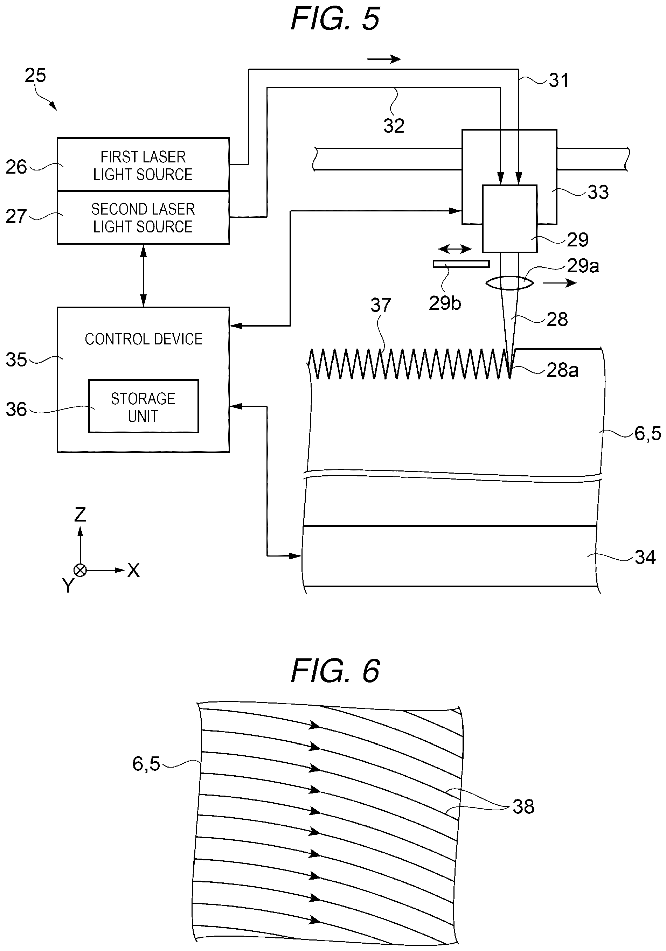

FIGS. 5 to 7 are views corresponding to the first machining process of step S1. As illustrated in FIG. 5, a laser machining apparatus 25 is prepared. The laser machining apparatus 25 includes a first laser light source 26 and a second laser light source 27. The first laser light source 26 is a light source that emits a femtosecond laser 28. The second laser light source 27 is a light source that emits a nanosecond laser. The second laser light source 27 may emit a laser having a pulse width of femtoseconds or more. A laser emitted by the second laser light source 27 is not limited to the nanosecond laser. The second laser light source 27 is also used as a light source that emits a picosecond laser.

The laser machining apparatus 25 includes an irradiation unit 29 that irradiates the base material 6 with the femtosecond laser 28 or the nanosecond laser. The first laser light source 26 and the irradiation unit 29 are coupled by a first optical fiber 31. The femtosecond laser 28 emitted from the first laser light source 26 is supplied to the irradiation unit 29 through the first optical fiber 31. The second laser light source 27 and the irradiation unit 29 are coupled by a second optical fiber 32. The nanosecond laser emitted from the second laser light source 27 is supplied to the irradiation unit 29 through the second optical fiber 32.

The irradiation unit 29 includes a condenser lens 29a and a shutter 29b. The condenser lens 29a condenses the femtosecond laser 28 and the nanosecond laser on the surface of the base material 6. The diameter of a first light condensing unit 28a on which the femtosecond laser 28 and the nanosecond laser are condensed is not limited, and for example, is 25 µm in the present embodiment. The shutter 29b switches between irradiation and non-irradiation with the femtosecond laser 28 and the nanosecond laser.

The laser machining apparatus 25 includes an X table 33 that moves the irradiation unit 29 in an X direction. The laser machining apparatus 25 includes a Y table 34 that moves the base material 6 in a Y direction. The X table 33 and the Y table 34 include a servomotor (not illustrated).

The laser machining apparatus 25 includes a control device 35. The control device 35 controls a moving speed and a moving amount of the X table 33 and the Y table 34. The control device 35 includes a storage unit 36. The storage unit 36 stores coordinate data of a path for irradiating the base material 6 with the femtosecond laser 28. The control device 35 can perform scanning with the femtosecond laser 28 or the nanosecond laser within a predetermined pattern based on the coordinate data of the path.

The control device 35 is electrically coupled to the first laser light source 26, the second laser light source 27, and the irradiation unit 29. The control device 35 controls start and stop of light emission of the first laser light source 26 and the second laser light source 27. The control device 35 controls opening and closing of the shutter 29b of the irradiation unit 29.

In step S1, the first laser light source 26 emits the femtosecond laser 28, and the second laser light source 27 stops emitting light. The base material 6 is irradiated with the femtosecond laser 28. Unevenness 37 is formed on the surface of the base material 6 along a trajectory for irradiation with the femtosecond laser 28. Abrasion processing is performed to instantaneously vaporize and disperse metal molecules at the surface of the base material 6 by performing irradiation with the femtosecond laser 28. By the abrasion processing, a surface having a large surface roughness and a low glossiness is formed.

As illustrated in FIG. 6, a plurality of first trajectories 38, which are trajectories for irradiation with the femtosecond laser 28, are arranged in parallel. The first trajectories 38 may be curved lines or straight lines. The first trajectories 38 may be a figure of a combination of curve lines and straight lines. As a result, the unevenness 37 is provided in a predetermined pattern without gaps.

Conditions for irradiation with the femtosecond laser 28 are not particularly limited. According to the present embodiment, for example, a laser fluence of the first light condensing unit 28a of the femtosecond laser 28 is 2600 mJ/cm² to 2700 mJ/cm². A frequency of a laser pulse is about 505 kHz. A scanning speed is 1300 mm/s. A pitch of a position irradiated with the laser pulse is 2.6 µm.

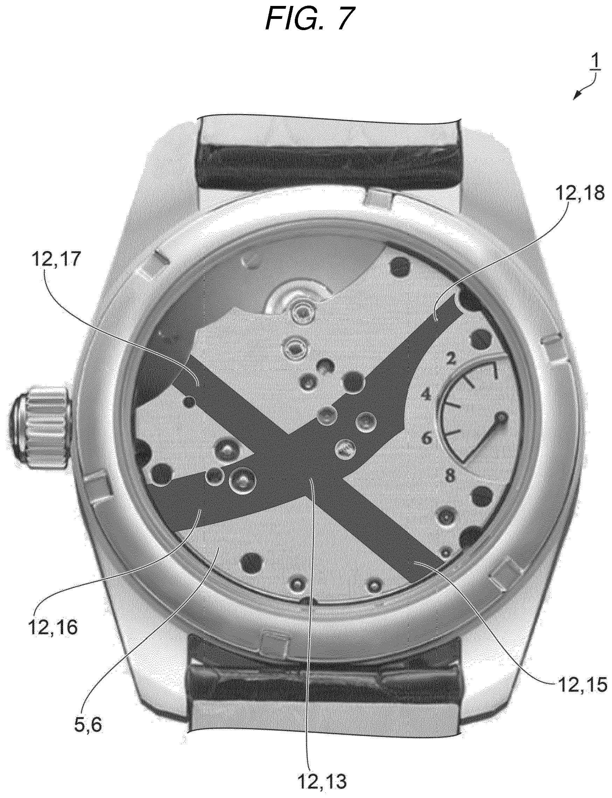

As illustrated in FIG. 7, the first processed surface 12 having the first pattern 13, the second pattern 15, the third pattern 16, the fourth pattern 17, and the fifth pattern 18 is formed on the base material 6 of the receiving plate 5.

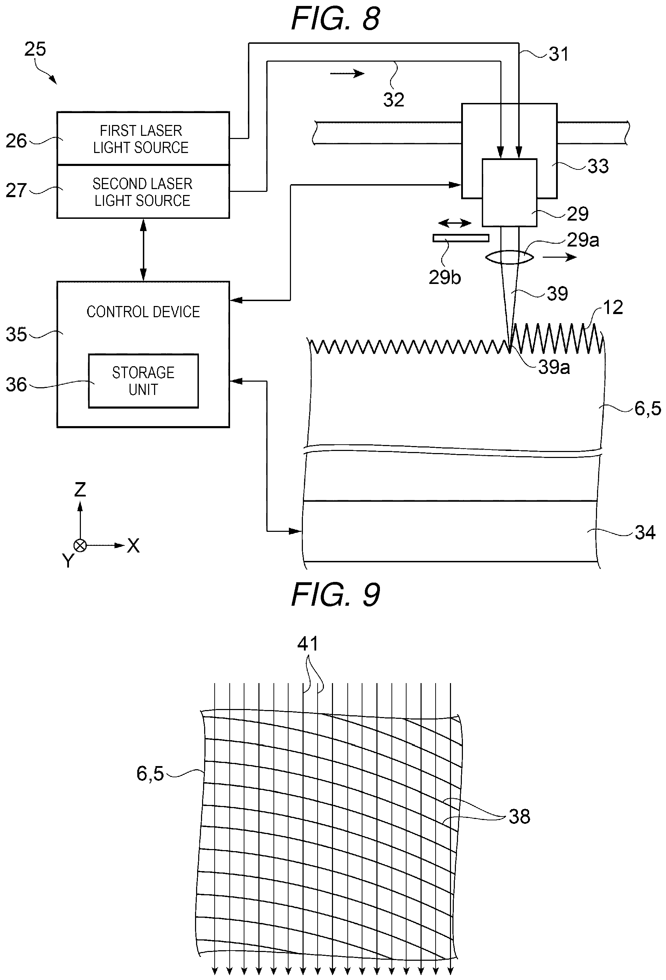

FIGS. 8 and 9 are views corresponding to the second machining process of step S2. As illustrated in FIG. 8, a laser machining apparatus 25 is used. In step S2, the first laser light source 26 stops emitting light, and the second laser light source 27 emits a nanosecond laser 39 serving as the second laser. The base material 6 is irradiated with the nanosecond laser 39. A diameter of a second light condensing unit 39a on which the nanosecond laser 39 is condensed is 25 µm. A laser fluence of the second light condensing unit 39a of the nanosecond laser 39 is 350 mJ/cm² to 450 mJ/cm². A frequency of the laser pulse is about 100 kHz. A scanning speed is 400 mm/s. A pitch of a position irradiated with the laser pulse is 4 µm. A pitch of a position irradiated with the laser pulse is not particularly limited, and when the diameter of the second light condensing unit 39a is 25 µm, the pitch is preferably 3 µm or more and 10 µm or less. A value obtained by dividing the pitch by the diameter of the second light condensing unit 39a is preferably 0.12 or more and 0.4 or less. When the pitch is less than 3 µm, productivity is low. When the pitch exceeds 10 µm, uniformity of the appearance is impaired. By performing irradiation with the nanosecond laser 39 at regular intervals with a constant pitch, a film thickness of an oxide film can be close to a constant value.

When the second light condensing unit 39a having a diameter of 25 µm is irradiated every 4 µm, the second light condensing unit 39a partially overlaps. An overlap ratio obtained by dividing an overlapping area by an area of the second light condensing unit 39a is preferably 50% or more and 90% or less. When the overlap ratio is less than 50%, the uniformity of the appearance is impaired. When the overlap ratio exceeds 90%, the productivity is reduced.

The unevenness 37 is oxidized along the trajectory for irradiation with the nanosecond laser 39. The surface of the base material 6 is heated by performing irradiation with the nanosecond laser 39. Since the base material 6 is heated in the air, the metal molecules are bonded to oxygen and are oxidized. In addition, it is presumed that protruding portions of the unevenness 37 are melted because heat is less likely to be dissipated. Therefore, by performing melting with the heat and oxidizing, a surface having a small surface roughness and a high glossiness is formed.

As illustrated in FIG. 9, a plurality of second trajectories 41, which are trajectories for irradiating with the nanosecond laser 39, are arranged in parallel. The second trajectories 41 may be curved lines or straight lines. As a result, the unevenness 37 on a surface in a predetermined pattern is oxidized without gaps. In FIG. 9, the first trajectories 38 and the second trajectories 41 intersect with each other. The arrangement is not limited thereto, and the first trajectories 38 and the second trajectories 41 may be parallel or may overlap each other. The first trajectories 38 and the second trajectories 41 may be unrelated trajectories.

As illustrated in FIG. 1, the first processed surface 12 having the second pattern 15, the third pattern 16, the fourth pattern 17, and the fifth pattern 18 is irradiated with the nanosecond laser 39. As a result, the second processed surface 14 is formed in a manner of covering the first processed surface 12 in the second pattern 15, the third pattern 16, the fourth pattern 17, and the fifth pattern 18.

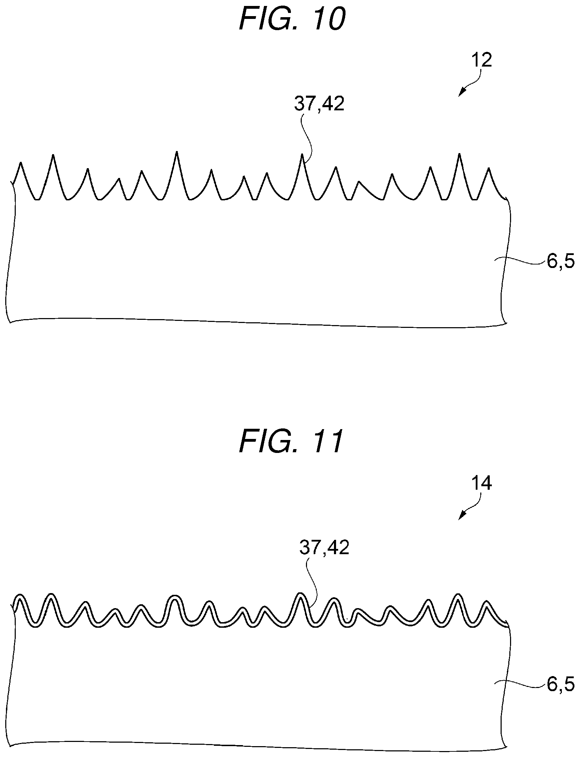

A surface of the first processed surface 12 is a surface formed by performing irradiation with the femtosecond laser 28. Therefore, as illustrated in FIG. 10, the first processed surface 12 has large unevenness 37 and a large first surface roughness. The surface of the first processed surface 12 is a surface formed by abrasion processing. Therefore, the metal molecules are not bonded to oxygen, and a film thickness of an oxide film 42 is small.

A surface of the second processed surface 14 is a surface formed by irradiating the first processed surface 12 with the nanosecond laser 39. Therefore, as illustrated in FIG. 11, the second processed surface 14 has the small unevenness 37 and a small second surface roughness. Since the surface of the second processed surface 14 is a surface heated in the air, the film thickness of the oxide film 42 is smaller than that of the first processed surface 12.

The film thickness of the oxide film is measured according to, for example, the following method. The receiving plate 5 is hardened with resin. Next, the hardened resin and the receiving plate 5 are cut, and a cross section of the hardened resin is polished. A cross section of the resin and the receiving plate 5 is observed by a scanning electron microscope, and the film thickness of the oxide film 42 is measured.

According to this manufacturing method, in step S1, the surface of the base material 6 of the receiving plate 5 which is a metal component is irradiated with the femtosecond laser 28. The femtosecond laser 28 is a laser having a pulse width of a femtosecond level. A predetermined pattern is formed by the first trajectories 38 of the femtosecond laser 28. The pattern includes a figure, a character, a graphic, and the like. The abrasion processing is performed to instantaneously vaporize and disperse the metal by the femtosecond laser 28. A surface on which a pattern is formed by the abrasion processing is the first processed surface 12. A part of the first processed surface 12 is irradiated with the nanosecond laser 39 of the second laser. A pulse width of the second laser is equal to or greater than the pulse width of the femtosecond laser 28. Therefore, an oxide film 42 is formed at a position irradiated with the second laser. A surface on which the oxide film 42 is formed is the second processed surface 14. The oxide film 42 on the second processed surface 14 is thicker than the oxide film 42 on the first processed surface 12. A surface roughness of a processed surface having the thicker oxide film 42 is smaller than that of a processed surface having the thinner oxide film 42, resulting in a glossy surface. Therefore, the second processed surface 14 can be a glossy surface as compared with the first processed surface 12. As a result, the second processed surface 14 is glossier than the first processed surface 12, and therefore, the second processed surface 14 can have an aesthetic appearance.

According to this manufacturing method, the second laser used in step S2 is the nanosecond laser 39. The nanosecond laser 39 is a laser having a pulse width of a nanosecond level. The nanosecond laser 39 can cause the first processed surface 12 to be the glossy second processed surface 14 without crushing the patterns formed by the femtosecond laser 28.

On the second processed surface 14, the film thickness of the oxide film 42 is more than 0 nm and 10 nm or less. According to this manufacturing method, the film thickness of the oxide film 42 on the second processed surface 14 is more than 0 nm, and therefore, the second processed surface 14 can be a glossy surface. Since the film thickness of the oxide film 42 on the second processed surface 14 is 10 nm or less, the patterns formed by performing irradiation with the femtosecond laser 28 can be seen without being crushed. Since the film thickness of the oxide film 42 on the second processed surface 14 is 10 nm or less, the oxide film 42 is transparent.

According to this configuration, the first processed surface 12 is formed by irradiating the base material 6 made of titanium, a titanium alloy, or stainless steel with the femtosecond laser 28. Further, the second processed surface 14 is formed by irradiating the base material 6 with the nanosecond laser 39. Since titanium, a titanium alloy, and stainless steel are difficult to be plated, it is difficult to change the appearance by plating. According to this configuration, even if a material of the timepiece component is titanium, a titanium alloy, or stainless steel that is difficult to be plated, multiple variations can be added to the appearance.

The timepiece 1 includes the above-described receiving plate 5. According to this configuration, the above-described receiving plate 5 provided in the timepiece 1 has an aesthetic appearance. Therefore, the timepiece 1 can be a timepiece including a timepiece component having an aesthetic appearance.

### Second Embodiment

The present embodiment is different from the first embodiment in that the first pattern 13 in the first region 8 illustrated in FIG. 1 is the second processed surface 14. In addition, the same components as those according to the first embodiment are denoted by the same reference numerals, and a redundant description thereof will be omitted.

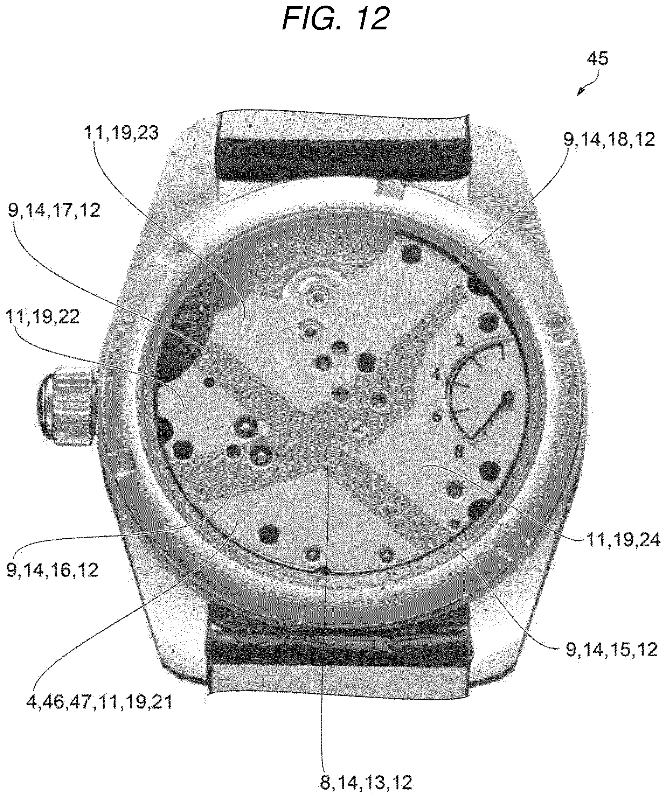

As illustrated in FIG. 12, a timepiece 45 includes a receiving plate 46 serving as a timepiece component and a metal component. The receiving plate 46 includes a base material 47 made of metal. A material of the base material 47 is the same as that of the base material 6 according to the first embodiment.

The base material 47 has a first region 8, a second region 9, and a third region 11. A surface of the base material 47 in the first region 8 and the second region 9 is the second processed surface 14. A shape of the first region 8 is the first pattern 13. The second processed surface 14 in the second region 9 includes four portions. Shapes of the four portions are the second pattern 15, the third pattern 16, the fourth pattern 17, and the fifth pattern 18.

The second processed surface 14 is formed by irradiating the first processed surface 12 with a second laser having a pulse width equal to or greater than the pulse width of the femtosecond laser 28. Therefore, the second processed surface 14 is a surface covering the entire first processed surface 12.

A surface roughness of the first processed surface 12 is a first surface roughness. A surface roughness of the second processed surface 14 is a second surface roughness. The second surface roughness is 0.1 µm or more and 0.3 µm or less. The second surface roughness is smaller than the first surface roughness. The receiving plate 46 includes the first processed surface 12 and the second processed surface 14, and the second processed surface 14 covers the entire first processed surface 12.

According to this configuration, the surface of the base material 47 includes the second processed surface 14. The second processed surface 14 is a surface covering the first processed surface 12. The first processed surface 12 is a surface having a larger surface roughness and a lower glossiness than those of the second processed surface 14. The second processed surface 14 is a surface having a smaller surface roughness and a higher glossiness than those of the first processed surface 12. The second processed surface 14 is a surface having a high glossiness, and can have an aesthetic appearance as compared with the first processed surface 12 having a low glossiness.

Next, a method for manufacturing the above-described receiving plate 46 will be described with reference to FIG. 4. In the flowchart in FIG. 4, the first machining process of step S1 is the same as that according to the first embodiment.

In the second machining process of step S2, the entire first processed surface 12 is irradiated with the second laser having a pulse width of femtoseconds or more, thereby forming a second processed surface 14 having a surface roughness smaller than that of the first processed surface 12 and having an oxide film 42 thicker than that of the first processed surface 12. Through processes described above, the second processed surface 14 covering the first processed surface 12 is completed.

According to this manufacturing method, all positions of the first processed surface 12 is irradiated with the second laser. The oxide film 42 is formed at the positions irradiated with the second laser. A surface on which the oxide film 42 is formed is the second processed surface 14. The oxide film 42 on the second processed surface 14 is thicker than the oxide film on the first processed surface 12. A surface roughness of a processed surface having the thicker oxide film 42 is smaller than that of a processed surface having the thinner oxide film 42, resulting in a glossy surface. Therefore, the second processed surface 14 can be a glossy surface as compared with the first processed surface 12. As a result, the second processed surface 14 is glossier than the first processed surface 12, and therefore, the second processed surface 14 can have an aesthetic appearance.

### Third Embodiment

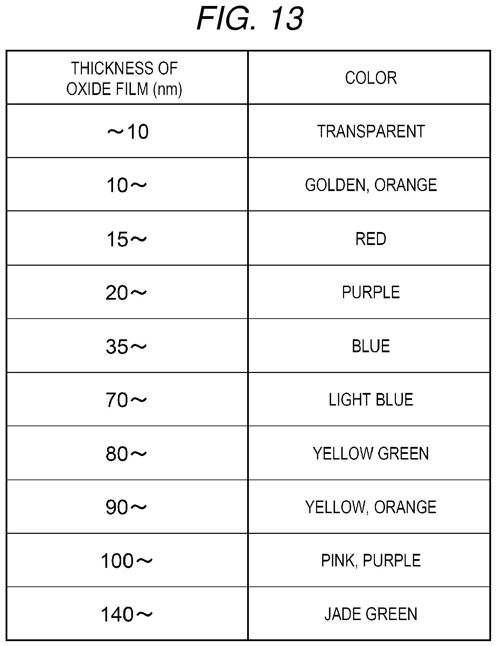

According to the first embodiment, the thickness of the oxide film 42 on the second processed surface 14 is set to 10 nm or less. The thickness of the oxide film 42 may exceed 10 nm. As illustrated in FIG. 13, when the thickness of the oxide film 42 exceeds 10 nm, a colored surface is observed. By adjusting a color tone, an aesthetic appearance can be attained.

The nanosecond laser 39 can increase or decrease an amount of energy received by the base material 6 to control the film thickness of the oxide film 42. Parameters caused by the amount of energy include a scanning speed, a frequency, and a laser fluence of the second light condensing unit 39a. The frequency indicates a frequency of the nanosecond laser 39 emitted from the irradiation unit 29. For example, it is assumed that parameters other than the frequency are fixed. When it is desired to increase the film thickness, the frequency is increased to shorten the pitch of the second light condensing unit 39a. In addition, for example, it is assumed that parameters other than the scanning speed are fixed. When it is desired to increase the film thickness, the scanning speed is decreased to shorten the pitch of the second light condensing unit 39a. In this manner, the thickness of the oxide film 42 can be controlled by controlling the amount of energy received by the base material 6.

### Fourth Embodiment

According to the first embodiment, a manufacturing process is finished when the second processed surface 14 is formed by performing irradiation with the second laser. Further, the second processed surface 14 may be plated with various metals. By adjusting a color tone, an aesthetic appearance can be attained.

### Fifth Embodiment

According to the first embodiment, the nanosecond laser 39 is emitted at regular intervals with a constant pitch. The nanosecond laser 39 may be emitted by gradually switching the pitch. Since the film thickness of the oxide film 42 gradually changes, gradation can be applied to the glossiness. By gradually increasing the film thickness of the oxide film 42, gradation can be applied to the color tone. A trajectory along which the second light condensing unit 39a moves is referred to as a scanning line. Gradation can be applied in a direction of the scanning line.

Since the film thickness of the oxide film 42 gradually changes by gradually changing an interval between scanning lines, gradation can be applied to the glossiness. Gradation can be applied in a direction intersecting the scanning line.

### Sixth Embodiment

According to the first embodiment, the first processed surface 12 and the second processed surface 14 are formed on the receiving plate 5. According to the second embodiment, the first processed surface 12 and the second processed surface 14 are formed on the receiving plate 46. In addition, the timepiece component on which the first processed surface 12 and the second processed surface 14 are formed may be any of a receiving member such as the receiving plate 5 and the receiving plate 46, a circuit cover, an oscillating weight, a main plate, a back cover, a dial, a pointer, and a balance with hairspring.

According to this configuration, any of the receiving member, the circuit cover, the oscillating weight, the main plate, the back cover, the dial, the pointer, and the balance with hairspring includes the first processed surface 12 and the second processed surface 14. The second processed surface 14 is a surface obtained by adding gloss to the patterns of the first processed surface 12. Therefore, the receiving member, the circuit cover, the oscillating weight, the main plate, the back cover, the dial, the pointer, and the balance with hairspring that include the second processed surface 14 can improve decorative property of the timepiece.

## Claims

1. A method for manufacturing a timepiece component (5), the method comprising:
(S1) forming a first processed surface (12) having a predetermined pattern (13) by irradiating a surface of a metal component with a first laser having a pulse width of femtoseconds; and **characterised in that** the method further comprises :
(S2) forming a second processed surface (14) having a surface roughness smaller than that of the first processed surface by irradiating at least a part of the first processed surface with a second laser having a pulse width of femtoseconds or more, wherein
when forming the first processed surface, an oxide film (42) is formed on the first processed surface, and
when forming the second processed surface, an oxide film thicker (42) than the oxide film of the first processed surface is formed on the second processed surface.

2. The method for manufacturing a timepiece component according to claim 1, wherein
the second laser is a nanosecond laser.

3. The method for manufacturing a timepiece component according to claim 1, wherein
the oxide film on the second processed surface has a film thickness of more than 0 nm and 10 nm or less.

4. A timepiece component (5) comprising:
a base material (6) made of metal;
a first processed surface (12) that has a predetermined pattern (13), that has a surface roughness of a first surface roughness, and that is formed by irradiating the base material with a first laser having a pulse width of femtoseconds; and
a second processed surface (14) that has a surface roughness of a second surface roughness smaller than the first surface roughness, and that is formed by irradiating at least a part of the first processed surface with a second laser having a pulse width of femtoseconds or more, wherein
the first processed surface and the second processed surface have an oxide film (42) on a surface thereof, and
the oxide film (42) on the surface of the second processed surface is thicker than the oxide film (42) on the surface of the first processed surface.

5. The timepiece component according to claim 4, wherein
the second surface roughness is 0.1 µm or more and 0.3 µm or less.

6. The timepiece component according to claim 4, wherein
the second laser is a nanosecond laser.

7. The timepiece component according to claim 4, wherein
a film thickness of the oxide film on the surface of the second processed surface is more than 0 nm and 10 nm or less.

8. The timepiece component according to claim 4, wherein
the timepiece component is any of a receiving member, a circuit cover, an oscillating weight, a main plate, a back cover, a dial, a pointer, and a balance with hairspring.

9. The timepiece component according to claim 4, wherein
a material of the base material is titanium, a titanium alloy, or stainless steel.

10. A timepiece (1) comprising the timepiece component according to claim 4.

## Patentansprüche

1. Verfahren zum Herstellen einer Uhrenkomponente (5), wobei das Verfahren umfasst:
(S1) Bilden einer ersten bearbeiteten Oberfläche (12), die ein vorbestimmtes Muster (13) aufweist, durch Bestrahlen einer Oberfläche einer Metallkomponente mit einem ersten Laser, der eine Pulsbreite von Femtosekunden aufweist; und
**dadurch gekennzeichnet, dass** das Verfahren weiter umfasst:
(S2) Bilden einer zweiten bearbeiteten Oberfläche (14), die eine Oberflächenrauheit aufweist, die geringer als jene der ersten bearbeiteten Oberfläche ist, durch Bestrahlen mindestens eines Teils der ersten bearbeiteten Oberfläche mit einem zweiten Laser, der eine Pulsbreite von Femtosekunden oder mehr aufweist, wobei
beim Bilden der ersten bearbeiteten Oberfläche ein Oxidfilm (42) auf der ersten bearbeiteten Oberfläche gebildet wird und
beim Bilden der zweiten bearbeiteten Oberfläche ein Oxidfilm (42), der dicker als der Oxidfilm der ersten bearbeiteten Oberfläche ist, auf der zweiten bearbeiteten Oberfläche gebildet wird.

2. Verfahren zum Herstellen einer Uhrenkomponente nach Anspruch 1, wobei
der zweite Laser ein Nanosekundenlaser ist.

3. Verfahren zum Herstellen einer Uhrenkomponente nach Anspruch **1,** wobei
der Oxidfilm auf der zweiten bearbeiteten Oberfläche eine Filmdicke von mehr als 0 nm und 10 nm oder weniger aufweist.

4. Uhrenkomponente (5), umfassend:
ein Basismaterial (6), das aus Metall hergestellt ist;
eine erste bearbeitete Oberfläche (12), die ein vorbestimmtes Muster (13) aufweist, das eine Oberflächenrauheit einer ersten Oberflächenrauheit aufweist, und die durch Bestrahlen des Basismaterials mit einem ersten Laser gebildet wird, der eine Pulsbreite von Femtosekunden aufweist; und
eine zweite bearbeitete Oberfläche (14), die eine Oberflächenrauheit einer zweiten Oberflächenrauheit aufweist, die geringer als die erste Oberflächenrauheit ist, und die durch Bestrahlen mindestens eines Teils der ersten bearbeiteten Oberfläche mit einem zweiten Laser gebildet wird, der eine Pulsbreite von Femtosekunden oder mehr aufweist, wobei
die erste bearbeitete Oberfläche und die zweite bearbeitete Oberfläche einen Oxidfilm (42) auf ihrer Oberfläche aufweisen und
der Oxidfilm (42) auf der Oberfläche der zweiten bearbeiteten Oberfläche dicker ist als der Oxidfilm (42) auf der Oberfläche der ersten bearbeiteten Oberfläche.

5. Uhrenkomponente nach Anspruch 4, wobei
die zweite Oberflächenrauheit 0,1 µm oder mehr und 0,3 µm oder weniger ist.

6. Uhrenkomponente nach Anspruch 4, wobei
der zweite Laser ein Nanosekundenlaser ist.

7. Uhrenkomponente nach Anspruch 4, wobei
eine Filmdicke des Oxidfilms auf der Oberfläche der zweiten bearbeiteten Oberfläche mehr als 0 nm und 10 nm oder weniger ist.

8. Uhrenkomponente nach Anspruch 4, wobei
die Uhrenkomponente eines von einem Aufnahmeelement, einer Schaltkreisabdeckung, einer Schwungmasse, einer Hauptplatine, einer rückseitigen Abdeckung, einem Zifferblatt, einem Zeiger und einer Unruh mit Haarfeder ist.

9. Uhrenkomponente nach Anspruch 4, wobei
ein Material des Basismaterials Titan, eine Titanlegierung oder Edelstahl ist.

10. Uhr (1), die die Uhrenkomponente nach Anspruch 4, umfasst.

## Revendications

1. Procédé de fabrication d'un composant de pièce d'horlogerie (5), le procédé comprenant :
(S1) la formation d'une première surface traitée (12) comportant un motif prédéterminé (13), par irradiation d'une surface d'un composant métallique avec un premier laser présentant une largeur d'impulsion en femtosecondes ; et
**caractérisé en ce que** le procédé comprend en outre :
(S2) la formation d'une deuxième surface traitée (14) présentant une rugosité de surface inférieure à celle de la première surface traitée, par irradiation d'une partie au moins de la première surface traitée avec un deuxième laser présentant une largeur d'impulsion en femtosecondes ou plus, dans lequel
lors de la formation de la première surface traitée, un film d'oxyde (42) est formé sur la première surface traitée, et
lors de la formation de la deuxième surface traitée, un film d'oxyde (42) plus épais que le film d'oxyde de la première surface traitée est formé sur la deuxième surface traitée.

2. Procédé de fabrication d'un composant de pièce d'horlogerie selon la revendication 1, dans lequel
le deuxième laser est un laser nanoseconde.

3. Procédé de fabrication d'un composant de pièce d'horlogerie selon la revendication 1, dans lequel
le film d'oxyde sur la deuxième surface traitée présente une épaisseur de film supérieure à 0 nm et de 10 nm ou moins.

4. Composant de pièce d'horlogerie (5) comprenant :
un matériau de base (6) constitué de métal ;
une première surface traitée (12) présentant un motif prédéterminé (13), laquelle présente une rugosité de surface d'une première rugosité de surface, et laquelle est formée par irradiation du matériau de base avec un premier laser présentant une largeur d'impulsion en femtosecondes ; et
une deuxième surface traitée (14) présentant une rugosité de surface d'une deuxième rugosité de surface inférieure à la première rugosité de surface, et laquelle est formée par irradiation d'une partie au moins de la première surface traitée avec un deuxième laser présentant une largeur d'impulsion en femtosecondes ou plus, dans lequel
la première surface traitée et la deuxième surface traitée comportent un film d'oxyde (42) sur une surface de celles-ci, et
le film d'oxyde (42) sur la surface de la deuxième surface traitée est plus épais que le film d'oxyde (42) sur la surface de la première surface traitée.

5. Composant de pièce d'horlogerie selon la revendication 4, dans lequel
la deuxième rugosité de surface est de 0,1 µm ou plus et de 0,3 µm ou moins.

6. Composant de pièce d'horlogerie selon la revendication 4, dans lequel
le deuxième laser est un laser nanoseconde.

7. Composant de pièce d'horlogerie selon la revendication 4, dans lequel
une épaisseur de film du film d'oxyde sur la surface de la deuxième surface traitée est supérieure à 0 nm et de 10 nm ou moins.

8. Composant de pièce d'horlogerie selon la revendication 4, dans lequel
le composant de pièce d'horlogerie est l'un quelconque parmi un élément de réception, un couvercle de circuit, un poids oscillant, une platine, un couvercle arrière, un cadran, une aiguille, et un balancier avec ressort spiral.

9. Composant de pièce d'horlogerie selon la revendication 4, dans lequel
un matériau du matériau de base est du titane, un alliage de titane ou de l'acier inoxydable.

10. Pièce d'horlogerie (1) comprenant le composant de pièce d'horlogerie selon la revendication 4.
